# EUROPÄISCHE PATENTSCHRIFT

(11) **EP 0 848 068 B1**
(45) Veröffentlichungstag und Bekanntmachung des Hinweises auf die Patenterteilung: **28.11.2001**
(21) Anmeldenummer: 98101000.2
(22) Anmeldetag: 12.10.1995
(51) Int. Cl.: C21B 13/14

(54) **Anlage und Verfahren zur Herstellung von Roheisen und/oder Eisenschwamm**
Plant and process for producing raw iron and/or sponge iron
Installation et procédé pour la fabrication de fer et/ou fer spongieux

(30) Priorität: 17.10.1994 AT 195894
(43) Veröffentlichungstag der Anmeldung: 17.06.1998
(62) Teilanmeldung aus: 95933227.1
(73) Patentinhaber: VOEST-ALPINE INDUSTRIEANLAGENBAU GMBH, 4020 Linz (AT)
(72) Erfinder: Kepplinger, Leopold Werner, 4060 LEonding (AT); Milionis, Konstantin, 8413 St. Georgen a/d Stiefling 122 (AT); Siuka, Dieter, 4501 Neuhofen (AT); Wiesinger, Horst, 4020 Linz (AT)
(74) Vertreter: Kopecky, Helmut, Dipl.-Ing.

(56) Entgegenhaltungen:
- EP-A- 0 364 865
- AT-B- 396 255
- US-A- 4 202 534
- US-A- 5 185 032
- PATENT ABSTRACTS OF JAPAN vol. 010, no. 230 (C-365), 9. August 1986 & JP 61 064807 A (NIPPON STEEL CORP), 3. April 1986

## Beschreibung

Die Erfindung betrifft eine Anlage zur Herstellung von Roheisen und/oder Eisenschwamm, mit einem Direktreduktions-Schachtofen für stückiges Eisenerz, einem Einschmelzvergaser, einer den Einschmelzvergaser mit dem Schachtofen verbindenden Zuleitung für ein Reduktionsgas, einer den Schachtofen mit dem Einschmelzvergaser verbindenden Förderleitung für das im Schachtofen gebildete Reduktionsprodukt, mit einer vom Schachtofen ausgehenden Topgas-Ableitung, mit in den Einschmelzvergaser mündenden Zuleitungen für sauerstoffhältige Gase und Kohlenstoffträger und einem am Einschmelzgefäß vorgesehenen Abstich für Roheisen und Schlacke. Weiters betrifft die Erfindung ein Verfahren zur Herstellung von Roheisen und/oder Eisenschwamm unter Verwendung dieser Anlage.

Ein Anlage dieser Art ist beispielsweise aus der AT-B - 376.241 sowie der DE-C - 40 37 977 bekannt. Hierbei wird stückiges Eisenerz im Schachtofen in einer Festbett-Direktreduktionszone zu Eisenschwamm reduziert. Der Eisenschwamm wird nachfolgend im Einschmelzvergaser in einer Einschmelzvergasungszone unter Zufuhr von Kohlenstoffträgern und sauerstoffhältigem Gas erschmolzen. Im Einschmelzvergaser wird ein CO- und H₂-hältiges Reduktionsgas erzeugt, welches über die den Einschmelzvergaser mit dem Schachtofen verbindende Zuleitung der Direktreduktionszone des Schachtofens zugeführt, dort umgesetzt und als Topgas abgezogen wird. Diese Anlage bzw. dieses Verfahren hat sich zur Verarbeitung von stückigem Eisenerz, worunter Erz mit einer Korngröße von über 3, vorzugsweise über 6 mm verstanden wird, in der Praxis bewährt.

Eine solche Anlage mit einem weiteren Direktreduktionsschachtofen, der mit einer durch Zugabe von Reformgas aufgewerteten Mischung von Überschuß - Reduktionsgas aus dem Einschmelzvergaser und Topgas der Direktreduktionsschachtofen betrieben wird, ist beschrieben in AT-B-396 255.

Der Erfindung liegt die Aufgabe zugrunde, eine Anlage sowie ein Verfahren zu schaffen, mit welchen sich nicht nur Stückerz, sondern auch Feinerz verarbeiten läßt, insbesondere Feinerz mit einer Korngröße zwischen 0 und 8 mm, vorzugsweise zwischen 0 und 4 mm. Hierbei soll insbesondere im Einschmelzvergaser anfallende überschüssige Energie genutzt werden. Insbesondere soll das erzeugte Produkt, Roheisen und gegebenenfalls Eisenschwamm, unter minimaler Energieeinbringung einem hohen Qualitätsstandard entsprechen.

Diese Aufgabe wird bei einer Anlage der eingangs beschriebenen Art durch mindestens einen Wirbelbettreaktor zur Aufnahme von Feinerz, eine Reduktionsgas-Zuleitung zu diesem Wirbelbettreaktor, eine Abgas-Ableitung aus dem Wirbelbettreaktor und eine Austragsvorrichtung, vorzugsweise eine Brikettiereinrichtung, für das im Wirbelbettreaktor gebildete Reduktionsprodukt gelöst, wobei in den Einschmelzvergaser eine Fördereinrichtung zum Einbringen des im Wirbelbettreaktor reduzierten, vorzugsweise anschließend brikettierten Reduktionsproduktes mündet.

Die Verarbeitung von Feinerz zu Eisenschwamm in einem Wirbelbettreaktor ist dem Prinzip nach aus der US-A - 5,082,251 bekannt. Hierbei wird das Reduktionsgas durch katalytische Reformierung von entschwefeltem und vorgewärmtem Erdgas mit überhitztem Wasserdampf in einem Reformerofen erzeugt. Dieses Verfahren ermöglicht die Herstellung von Eisenschwamm hoher Qualität, jedoch ausschließlich aus Feinerz.

Durch die erfindungsgemäße Verknüpfung einer eingangs beschriebenen Schachtofen-Anlage mit einem Wirbelbettreaktor gelingt es, die Anlage unter optimaler Energieausnützung der zugeführten Energieträger einzusetzen.

Das erfindungsgemäße Verfahren zur Herstellung von Roheisen und/oder Eisenschwamm ist dadurch gekennzeichnet, daß Stückerz in einer Festbett-Direktreduktionszone zu Eisenschwamm reduziert wird, der Eisenschwamm in einer Einschmelzvergasungszone unter Zufuhr von Kohlenstoffträgern und sauerstoffhältigem Gas erschmolzen und ein CO- und H₂-hältiges Reduktionsgas erzeugt wird, das in die Festbett-Direktreduktionszone eingeleitet, dort umgesetzt und als Topgas abgezogen wird, und daß Feinerz in einer Wirbelbett-Direktreduktionszone im Wirbelbett-Verfahren zu Eisenschwamm reduziert wird, wobei zumindest ein Teil des in der Wirbelbett-Direktreduktionszone gebildeten Eisenschwammes in der Einschmelzvergasungszone aufgeschmolzen wird.

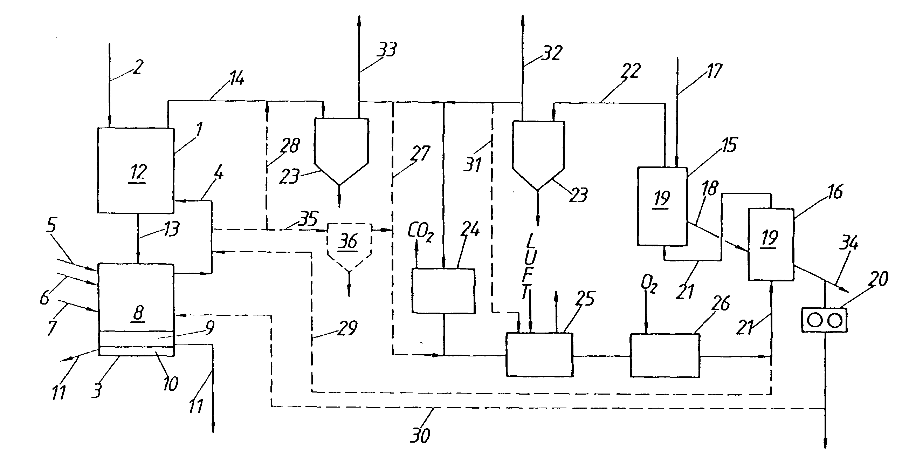

Die Erfindung ist nachfolgend anhand eines in der Zeichnung schematisch dargestellten Ausführungsbeispieles näher erläutert, wobei die in der Zeichnung dargestellte Figur das Verfahrensschema einer erfindungsgemäßen Anlage veranschaulicht.

In einen Schachtofen 1 wird von oben über eine Fördereinrichtung 2 stückiges Eisenerz über ein nicht dargestelltes Schleusensystem, gegebenenfalls zusammen mit Zuschlagstoffen, chargiert. Der Schachtofen 1 steht mit einem Einschmelzvergaser 3 in Verbindung, in dem aus Kohle und sauerstoffhältigem Gas ein Reduktionsgas erzeugt wird, welches über eine Zuleitung 4 dem Schachtofen 1 zugeführt wird, wobei in der Zuleitung 4 gegebenenfalls eine Gasreinigungs- und eine Gaskühlungseinrichtung vorgesehen sind.

Der Einschmelzvergaser 3 weist eine Zuführung 5 für feste Kohlenstoffträger, eine Zuführung 6 für sauerstoffhältige Gase sowie gegebenenfalls Zuführungen 7 für bei Raumtemperatur flüssige oder gasförmige Kohlenstoffträger, wie Kohlenwasserstoffe, sowie für gebrannte Zuschläge auf. In dem Einschmelzvergaser 3 sammelt sich unterhalb der Einschmelzvergasungszone 8 schmelzflüssiges Roheisen 9 und schmelzflüssige Schlacke 10, die über einen Abstich 11 abgestochen werden.

Das im Schachtofen 1 in einer Festbett-Direktreduktionszone 12 zu Eisenschwamm reduzierte stückige Erz wird zusammen mit den in der Direktreduktionszone 12 gebrannten Zuschlägen über eine den Schachtofen 1 mit dem Einschmelzvergaser 3 verbindende Förderleitung 13 zugeführt, beispielsweise mittels nicht näher dargestellter Austragsschnecken etc.. An dem oberen Teil des Schachtofens schließt eine Topgas-Ableitung 14 für das in der Direktreduktionszone 12 aus Reduktionsgas gebildete Topgas an.

Die Anlage weist ferner zwei in Serie hintereinander geschaltete Wirbelbettreaktoren 15, 16 auf, wobei Feinerz über eine Feinerz-Zuleitung 17 dem ersten Wirbelbettreaktor 15 und von diesem über eine Förderleitung 18 zum nachgeordneten Wirbelbettreaktor 16 geleitet wird. Das in den Wirbelbettreaktoren 15, 16 in jeweils einer Wirbelbett-Direktreduktionszone 19 fertigreduzierte Material (Eisenschwamm) wird nach Austritt aus dem zweiten Wirbelbettreaktor 16 einer Brikettieranlage 20 zugeführt, wo es heiß- oder kaltbrikettiert wird. Vor Einleitung des Feinerzes in den ersten Wirbelbettreaktor 15 wird es einer Erzvorbereitung, wie einer Trocknung, unterzogen, was jedoch nicht näher dargestellt ist.

Reduktionsgas wird im Gegenstrom zum Erzdurchfluß vom Wirbelbettreaktor 16 zum Wirbelbettreaktor 17, d.h. zu den Wirbelbettreaktoren vorgesehenen Wirbelbett-Direktreduktionszonen 19, über die Gasleitung 21 gerührt und als Abgas über eine Abgas-Ableitung 22 aus dem in Erzflußrichtung ersten Wirbelbettreaktor 15 abgeleitet.

Sowohl das aus dem Schachtofen 1 abgezogene Topgas als auch das aus dem Wirbelbettreaktor 15 abgezogene Abgas werden jeweils in einer vorzugsweise als Naßwäscher ausgebildeten Reinigungseinrichtung 23 gekühlt und gewaschen und nachfolgend durch Zusammenmünden der Topgas-Ableitung 14 und der Abgas-Ableitung 22 miteinander vermischt. Dieses so gebildete Mischgas wird durch eine vorzugsweise als CO₂-Wäscher ausgebildete CO₂-Entfernungsanlage 24 hindurchgeschickt und von CO₂ befreit. Anschließend erfolgt eine Aufheizung des Mischgases in einem Wärmetauscher 25 auf ca. 400°C. Diesem nachgeordnet ist eine Nachverbrennungseinrichtung 26, in der ein Teil des Mischgases unter Sauerstoffzuführung verbrannt wird, wodurch das Mischgas die für die Direktreduktion in den Wirbelbettreaktoren 15, 16 erforderliche Temperatur bis zu ca. 850°C erreicht. Dieses aufgeheizte Mischgas steht nunmehr den Wirbelbettreaktoren 15, 16 als Reduktionsgas zur Verfügung.

Das Stückerz und das Feinerz werden entweder von getrennten Lagerstätten der Anlage zugeführt oder, falls Mischerz zur Verarbeitung gelangen soll, wird dieses einer Erzsiebung unterzogen, worauf die Grobkornfraktion dem Schachtofen 1 und die Feinkornfraktion dem Wirbelbettreaktor 15 zugeführt werden.

Gemäß einer bevorzugten Ausführungsform wird lediglich das Abgas der Wirbelbettreaktoren 15, 16 einer CO₂-Wäsche unterzogen und das aus dem Schachtofen 1 abgezogene Topgas über eine zum CO₂-Wäscher 24 vorgesehene Bypass-Leitung 27 erst nach der CO₂-Wäsche des Abgases mit diesem vermischt. Wenn nur geringe Stückerzmengen - im Verhältnis zu den eingesetzten Feinerzmengen - eingesetzt werden oder eventuell überhaupt kein Stückerz reduziert wird, kann das im Einschmelzvergaser 3, der dann lediglich als Kohlevergasungsreaktor arbeitet, gebildete Reduktionsgas über eine den Schachtofen 1 überbrückende Bypass-Leitung 28 direkt von der in den Schachtofen 1 mündenden Zuleitung 4 abgezweigt werden. Diese Bypass-Leitung 28 tritt auch dann in Aktion, wenn im Einschmelzvergaser 3 Überschußgas, also mehr Reduktionsgas, anfällt, als im Schachtofen 1 benötigt wird. Mit Hilfe dieses Überschußgases kann die Gaszusammensetzung des in die Wirbelbettreaktoren 15, 16 eingebrachten Reduktionsgases gesteuert werden. Hierdurch kann eine Steigerung der in den Wirbelbettreaktoren 15, 16 reduzierten Feinerzmenge erzielt werden.

Für den Fall, daß eine Kapazitätserhöhung der Reduktion des Stückerzes im Schachtofen 1 erforderlich ist, kann Überschußgas des den Wirbelbettreaktoren 15, 16 zugeführten Reduktionsgases über eine Zweigleitung 29 in den Schachtofen 1 eingeleitet werden.

Sowohl das Roheisen als auch der brikettierte Eisenschwamm werden in einem Kompakthüttenwerk, beispielsweise ausgestattet mit Elektroöfen und Konvertern, verarbeitet. Brikettierter Eisenschwamm wird auch in den Einschmelzvergaser 3 über die Fördereinrichtung 30 eingebracht und dort eingeschmolzen. Hierdurch wird überschüssige Energie des Einschmelzvergasers 3 genutzt.

Der Wärmetauscher wird vorteilhaft mit einem Teil des Abgases der Wirbelbettreduktion, das über eine Leitung 31 zugeführt wird, betrieben. Für den Reduktionsprozeß bzw. den Wärmetauscher 25 nicht benötigtes Abgas wird über eine Exportgas-Ableitung 32 anderen Verbrauchern zugeführt. Dies gilt auch für überschüssiges Topgas, das über die Ableitung 33 Verbrauchern zugeführt werden kann. Die Ableitungen 32 und 33 münden vorteilhaft in einen Gas-Sammelbehälter, wie einen Gasometer, zur Zwischenspeicherung des Exportgases und des Topgases. Damit können in vorteilhafter Weise unterschiedliche Gasproduktionen und Druckschwankungen im System abgefangen und ausgeglichen werden.

Anstelle der Brikettieranlage 20 kann auch eine Austragvorrichtung 34, wie z.B. ein Kaltaustragsystem, vorgesehen sein.

Über eine von der Zuleitung 4 ausgehende Bypass-Leitung 35 können der Naßwäscher 23 und der CO₂-Wäscher 24 überbrückt werden. Dies ist vorteilhaft, da das den Einschmelzvergaser 3 verlassende Gas einen geringen CO₂-Gehalt aufweist und es daher nicht notwendig ist, das Gas über diese Einrichtungen zu führen, solange der erhöhte Schwefelgehalt im Gas nicht stört. Weiters bietet das System die Möglichkeit, den CO₂-Gehalt gezielter einzustellen. In die Bypass-Leitung 35 ist ein Staubabscheider 36 integriert.

Sämtliche Fördereinrichtungen bzw. Gasleitungen sind mit Regelorganen bzw. Verdichtern (Kompressoren) in üblicher Weise ausgestattet.

### Beispiel:

In einer der Zeichnung entsprechenden Anlage mit einer Produktionskapazität von 100 t/h brikettiertem Eisenschwamm aus Feinerz und etwa 100 t/h Roheisen aus Stückerz wurden 148 t/h Feinerz in die Wirbelbettreaktoren 15, 16 sowie 149 t/h Stückerz in den Schachtofen 1 eingesetzt.

Als Zuschlagstoffe werden Kalkstein, Dolomit und Quartz in einer Menge von 27 t/h in den Wirbelbettreaktor 15 und/oder in den Schachtofen 1 chargiert.

In den Einschmelzvergaser 3 werden Kohle in einer Menge von 800 kg/t Roheisen sowie 540 Nm³/t Roheisen Sauerstoff eingebracht.

Aus dem Schachtofen 1 werden 109 t/h Eisenschwamm ausgetragen und in den Einschmelzvergaser 3 chargiert und dort eingeschmolzen. Roheisen fällt in einer Menge von 100 t/h an und weist folgende chemische Zusammensetzung auf:

**Tabelle I**

| | |
|---|---|
| Fe | 94,9 % |
| C | 4,3 % |
| Si | 0,4 % |
| S | 0,04 % |
| P | 0,08 % |

Im Einschmelzvergaser 3 kommt es zur Bildung von 30 t/h Schlacke.

Das im Einschmelzvergaser 3 durch Kohlevergasung entstehende Reduktionsgas wird nach einer Reinigung und Kühlung mit etwa 850°C in die Direktreduktionszone 12 des Schachtofens 1 eingeleitet. Es fällt in einer Menge von 190.000 Nm³/h mit folgender chemischer Zusammensetzung an:

**Tabelle II**

| | |
|---|---|
| CO [%] | 69,60 |
| CO₂ [%] | 2,83 |
| H₂ [%] | 22,57 |
| H₂O [%] | 1,54 |
| H₂S ppm | 500,00 |
| CH₄ [%] | 0,51 |
| N₂,Ar [%] | 2,90 |

Sein Heizwert beträgt 11.300 kJ/Nm³.

Das aus dem Schachtofen 1 austretende Topgas fällt in einer Menge von 160.000 Nm³/h an. Seine chemische Zusammensetzung ist in nachstehender Tabelle III wiedergegeben.

**Tabelle III**

| | |
|---|---|
| CO [%] | 42,30 |
| CO₂ [%] | 35,87 |
| H₂ [%] | 15,80 |
| H₂O [%] | 2,26 |
| H₂S ppm | 125,00 |
| CH₄[%] | 1,06 |
| N₂,Ar [%] | 2,70 |

Sein Heizwert beträgt 7.435 kJ/Nm³.

Bei dem in den Wirbelbettreaktor 15 chargierten Feinerz handelt es sich um Erz mit einer maximalen Korngröße von 8 mm. Es wird zu Eisenschwamm reduziert, u.zw. in zwei Stufen, und anschließend heißbrikettiert wird. Der heißbrikettierte Eisenschwamm weist einen Metallisierungsgrad (Feₘₑₜ/Fe_{ges}) von 92 % auf.

Das in die Wirbelbettreaktoren 15, 16 eingeführte Reduktionsgas wird durch Mischen des aus dem Schachtofen 1 abgezogenen Topgases mit einem Teil des aus dem in Fließrichtung des Feinerzes erstgelegenen Wirbelbettreaktor 15 abzogenen Abgases gebildet. Dieses Abgas fällt in einer Menge von 189.766 Nm³/h an und weist die nachstehende chemische Zusammensetzung auf.

**Tabelle IV**

| | |
|---|---|
| CO [%] | 41,41 |
| CO₂ [%] | 25,28 |
| H₂ [%] | 17,10 |
| H₂O [%] | 1,50 |
| H₂S ppm | 22,31 |
| CH₄ [%] | 3,50 |
| N₂,Ar [%] | 11,21 |

Sein Heizwert beträgt 8.337 kJ/Nm³. Von diesem Abgas werden 20.905 Nm³ als Exportgas über die Exportgas-Ableitung 32 für andere Verwendungszwecke abgezweigt. 151.000 Nm³/h des Abgases werden mit dem aus dem Schachtofen 1 abgezogenen Topgas vermischt, u.zw. nachdem sowohl das Topgas als auch das Abgas einer Naßwäsche unterzogen wurden.

Das so gebildete Mischgas (311.000 Nm³/h) weist einen Heizwert von 7.873 kJ/Nm³ auf. Seine chemische Zusammensetzung ist wie folgt:

**Tabelle V**

| | |
|---|---|
| CO [%] | 41,87 |
| CO₂ [%] | 30,73 |
| H₂ [%] | 16,43 |
| H₂O [%] | 1,89 |
| H₂S ppm | 75,14 |
| CH₄ [%] | 2,24 |
| N₂,Ar [%] | 6,83 |

Nach dem CO₂-Waschen dieses Mischgases im CO₂-Wäscher 24 ist seine chemische Zusammensetzung wie folgt:

**Tabelle VI**

| | |
|---|---|
| CO [%] | 61,34 |
| CO₂ [%] | 0,45 |
| H₂ [%] | 24,07 |
| H₂O [%] | 0,70 |
| H₂S ppm | 1,11 |
| CH₄ [%] | 3,32 |
| N₂,Ar [%] | 10,11 |

Seine Menge beträgt 210.140 Nm³/h und sein Heizwert liegt bei 11.547 kJ/Nm³. Das aus dem CO₂-Wäscher 24 abgeleitete, in der Hauptsache CO₂ enthaltende Gas fällt in einer Menge von 100.860 Nm³/h an. Seine chemische Zusammensetzung ist in nachstehender Tabelle VII wiedergegeben.

**Tabelle VII**

| | |
|---|---|
| CO [%] | 1,29 |
| CO₂ [%] | 93,81 |
| H₂ [%] | 0,51 |
| H₂O [%] | 4,37 |
| H₂S ppm | 229,38 |
| CH₄ [%] | 0,00 |
| N₂,Ar [%] | 0,00 |

Anschließend erfolgt eine Erwärmung des Mischgases in dem Wärmetauscher 25, indem aus dem Wirbelbettreaktor 15 über die Gasleitung 31 abgeleitetes Abgas in einer Menge von 17.861 Nm³/h verbrannt wird. Zu dieser Verbrennung ist eine Luftzuführung in einer Menge von 32.184 Nm³/h nötig.

In das so im Wärmetauscher 25 erwärmte Mischgas wird Sauerstoff in einer Menge von 5.083 Nm³/h zugeführt, so daß eine Teilverbrennung des Mischgases stattfindet. Dieses nunmehr auf eine Temperatur von 820°C erhitzte Mischgas steht nunmehr als Reduktionsgas für die Direktreduktion des Feinerzes in den Wirbelbettreaktoren 15 und 16 zur Verfügung, u.zw. in einer Menge von 210.846 Nm³/h und mit einem Heizwert von 10.947 kJ/Nm³. Seine chemische Zusammensetzung ist in nachstehender Tabelle VIII angegeben.

**Tabelle VIII**

| | |
|---|---|
| CO [%] | 58,16 |
| CO₂ [%] | 3,60 |
| H₂ [%] | 22,82 |
| H₂O [%] | 2,19 |
| H₂S ppm | 1,11 |
| CH₄ [%] | 3,15 |
| N₂,Ar [%] | 10,09 |

## Patentansprüche

1. Anlage zur Herstellung von Roheisen und/oder Eisenschwamm, mit einem Direktreduktions-Schachtofen (1) für stückiges Eisenerz, einem Einschmelzvergaser (3), einer den Einschmelzvergaser (3) mit dem Schachtofen (1) verbindenden Zuleitung (4) für ein Reduktionsgas, einer den Schachtofen (1) mit dem Einschmelzvergaser (3) verbindenden Förderleitung (13) für das im Schachtofen (1) gebildete Reduktionsprodukt, mit einer vom Schachtofen (1) ausgehenden Topgas-Ableitung (14), mit in den Einschmelzvergaser (3) mündenden Zuleitungen (5, 6, 7) für sauerstoffhältige Gase und Kohlenstoffträger und einem am Einschmelzgefäß (3) vorgesehenen Abstich (11) für Roheisen und Schlacke, **gekennzeichnet durch** mindestens einen Wirbelbettreaktor (15, 16) zur Aufnahme von Feinerz, eine Reduktionsgas-Zuleitung (21) zu diesem Wirbelbettreaktor (15, 16), eine Abgas-Ableitung (22) aus dem Wirbelbettreaktor (15) und eine Austragsvorrichtung (34), vorzugsweise eine Brikettiereinrichtung (20), für das im Wirbelbettreaktor (15, 16) gebildete Reduktionsprodukt, wobei in den Einschmelzvergaser (3) eine Fördereinrichtung zum Einbringen des im Wirbelbettreaktor (15, 16) reduzierten, vorzugsweise anschließend brikettierten Reduktionsproduktes mündet.

2. Verfahren zur Herstellung von Roheisen und/oder Eisenschwamm mit einer Anlage nach Anspruch 1, **dadurch gekennzeichnet, daß** Stückerz in einer Festbett-Direktreduktionszone (12) zu Eisenschwamm reduziert wird, der Eisenschwamm in einer Einschmelzvergasungszone (8) unter Zufuhr von Kohlenstoffträgern und sauerstoffhältigem Gas erschmolzen und ein CO und H₂-hältiges Reduktionsgas erzeugt wird, das in die Festbett-Direktreduktionszone (12) eingeleitet, dort umgesetzt und als Topgas abgezogen wird, und daß Feinerz in einer Wirbelbett-Direktreduktionszone (19) im Wirbelbett-Verfahren zu Eisenschwamm reduziert wird, wobei zumindest ein Teil des in der Wirbelbett-Direktreduktionszone (19) gebildeten Eisenschwammes in der Einschmelzvergasungszone (8) aufgeschmolzen wird.

## Claims

1. A plant for the production of pig iron and/or sponge iron, comprising a direct-reduction shaft furnace (1) for lumpy iron ore, a melter gasifier (3), a feed duct (4) for a reducing gas, connecting the melter gasifier (3) with the shaft furnace (1), a conveying duct (13) for the reduction product formed in the shaft furnace (1), connecting the shaft furnace (1) with the melter gasifier (3), a top-gas discharge duct (14) departing from the shaft furnace (1), feed ducts (5, 6, 7) for oxygen-containing gases and carbon carriers, running into the melter gasifier (3), and a tap (11) for pig iron and slag, provided at the melting vessel (3), **characterized by** at least one fluidized bed reactor (15, 16) intended to receive fine ore, a reducing-gas feed duct (21) leading to said fluidized bed reactor (15, 16), an offgas discharge duct (22) departing from the fluidized bed reactor (15), and a discharge means (34), preferably a briquetting means (20), provided for the reduction product formed in the fluidized bed reactor (15, 16), wherein a conveying means for introducing the reduction product reduced in the fluidized bed reactor (15, 16) and preferably briquetted afterwards runs into the melter gasifier (3).

2. A process for the production of pig iron and/or sponge iron in a plant according to claim 1, **characterized in that** lumpy ore is reduced to sponge iron in a fixed-bed direct reduction zone (12), the sponge iron is melted in a meltdown gasifying zone (8) under supply of carbon carriers and oxygen-containing gas, and a CO and H₂-containing reducing gas is produced, which is introduced into the fixed-bed direct reduction zone (12), is reacted there, and is drawn off as a top gas, and that fine ore is reduced to sponge iron in a fluidized-bed direct reduction zone (19) according to the fluidized bed method, wherein at least a portion of the sponge iron formed in the fluidized-bed direct reduction zone (19) is melted in the meltdown gasifying zone (8).

## Revendications

1. Installation pour la fabrication de fer brut et/ou de fer spongieux, comprenant un four vertical de réduction directe (1) pour du minerai de fer en morceaux, un gazéificateur de fusion (3), une conduite d'amenée (4) pour un gaz de réduction qui relie le gazéificateur de fusion (3) au four vertical (1), une conduite de convoyage (13) pour le produit de réduction formé dans le four vertical (1), qui relie le four vertical (1) au gazéificateur de fusion (3), une conduite d'évacuation pour gaz de gueulard (14) sortant du four vertical (1), des conduites d'amenée (5, 6, 7) qui débouchent dans le gazéificateur de fusion (3) pour des gaz contenant de l'oxygène et pour des produits d'apport de carbone, et une piquée (11) prévue au niveau du gazéificateur de fusion (3) pour le fer brut et le laitier, **caractérisée par** au moins un réacteur à lit fluidisé (15, 16) pour la réception de fines de minerai, une conduite d'amenée de gaz de réduction (21) vers ce réacteur à lit fluidisé (15, 16), une conduite d'évacuation de gaz brûlés (22) hors du réacteur à lit fluidisé (15), et un dispositif d'enlèvement (34), de préférence un dispositif à briquettes (20), pour le produit de réaction formé dans le réacteur à lit fluidisé (15, 16), et en ce que dans le gazéificateur de fusion (3) débouche un dispositif de convoyage pour l'introduction du produit de réaction réduit dans le réacteur à lit fluidisé (15, 16) et de préférence mis ensuite en briquettes.

2. Procédé pour la fabrication de fer brut et/ou de fer spongieux, au moyen d'une installation selon la revendication 1, **caractérisé en ce que** le minerai en morceaux est réduit en fer spongieux dans une zone de réduction directe (12) à lit fixe, le fer spongieux est mis en fusion dans une zone de gazéification de fusion (8) avec amenée de produits d'apport de carbone et de gaz contenant de l'oxygène, et l'on produit un gaz de réduction contenant du CO et du H₂, que l'on introduit dans la zone de réduction directe (12) à lit fixe, ce gaz de réduction étant converti à ce niveau et extrait sous forme de gaz de gueulard, et **en ce que** l'on réduit des fines de minerai en fer spongieux dans une zone de réduction directe (19) à lit fluidisé, suivant un procédé en lit fluidisé, et **en ce qu'**une partie au moins du fer spongieux formé dans la zone de réduction directe (19) à lit fluidisé est mise en fusion dans la zone de gazéification de fusion (8).
